# EUROPÄISCHE PATENTANMELDUNG

(11) **EP 1 618 979 A1**
(43) Veröffentlichungstag der Anmeldung: **25.01.2006**
(21) Anmeldenummer: 05015486.3
(22) Anmeldetag: 16.07.2005
(51) Int. Cl.: B23D 21/04

(54) **Rohrabschneider**

(30) Priorität: 23.07.2004 DE 202004011781 U
(71) Anmelder: Dako Werk Dowidat KG, 42897 Remscheid (DE)
(72) Erfinder: Tasillo, Claudio, 44265 Dortmund (DE)
(74) Vertreter: Stenger, Watzke & Ring

(57) **Zusammenfassung**

Die vorliegende Erfindung betrifft einen Rohrabschneider zum Durchtrennen rohrfömiger Gegenstände mit einem Gehäuse (1a,b) und einem gegenüber einem Widerlager (18,19) zustellbaren Schneidelement (17), bei dem das Schneidelement und das Widerlager in einem gegenüber dem Gehäuse um die Längsachse des zu durchtrennenden Gegenstandes drehbaren Futter (15) angeordnet sind. Der Rohrabschneider weist eine Antriebswelle (4) für einen automatischen Antrieb auf.

## Beschreibung

Die vorliegende Erfindung betrifft einen Rohrabschneider zum Durchtrennen rohrförmiger Gegenstände mit einem Gehäuse und einem gegenüber einem Widerlager zustellbaren Schneidelement, bei dem das Schneidelement und das Widerlager in einem gegenüber dem Gehäuse um die Längsachse des zu durchtrennenden Gegenstandes drehbaren Futter angeordnet sind.

Rohrabschneider sind aus dem Stand der Technik bekannt. Sie weisen ein offenes Maul auf, in welches das zu durchtrennende Rohr eingelegt wird. In dem Maul sind ein zustellbares Schneidrad sowie meist zwei Gegendruckrollen angeordnet. Das zu durchtrennende Rohr wird zwischen dem Schneidrad und den Gegendruckrollen platziert und durch Zustellen des Schneidrades fixiert. Das Schneidrad wird soweit zugestellt, daß es gegenüber dem zu durchtrennenden Rohr einen Druck ausübt, der bei einer Rotation des gesamten Rohrabschneiders um das Rohr herum dazu führt, daß das Schneidrad in das Rohrmaterial eindringt und dieses teilweise durchtrennt. Das Schneidrad wird nach einigen Umdrehungen des Rohrabschneiders erneut zugestellt und dieser um das Rohr rotiert. Diese Schritte werden so lange wiederholt, bis das Rohr schließlich durchtrennt ist.

Um die Handhabung derartiger Rohrabschneider zu vereinfachen und insbesondere ein Durchtrennen von schwer zugänglichen Rohren zu ermöglichen, wird in der WO 02/02264 A1 ein Rohrabschneider vorgeschlagen, bei dem das Schneidrad und die Gegendruckrollen in einem Futter gegeneinander verschiebbar angeordnet sind. Das Futter ist seinerseits drehbar in einem Gehäuse des Rohrabschneiders angeordnet und kann durch einen Nutzer mittels eines Ratschenantriebes um das zu durchtrennende Rohr rotiert werden. Durch Verwendung eines solchen Ratschenrohrabschneiders wird ein Durchtrennen des Rohres ermöglicht, ohne den gesamten Rohrabschneider um das Rohr rotieren zu müssen, wodurch auch ein Durchtrennen von Rohren bei verminderter Zugänglichkeit ermöglicht wird. Die Betätigung des Ratschenantriebes erfolgt allerdings weiterhin manuell durch den Nutzer und ist mit entsprechender Mühe verbunden. Ein Trennvorgang benötigt aufgrund der manuellen Betätigung nachteiligerweise einen verhältnismäßig langen Zeitraum. Zusätzlich ist eine derartige Zugänglichkeit des zu durchtrennenden Rohres erforderlich, daß eine ausreichende Möglichkeit zur Bewegung des Ratschenantriebes gegeben ist. Bei einem Durchtrennen von Rohren mit stark eingeengten Zugangsmöglichkeiten ist diese oszillierende Bewegung oftmals nicht oder nur eingeschränkt möglich, was die Handhabung erschwert.

Der vorliegenden Erfindung liegt ausgehend vom beschriebenen Stand der Technik die **Aufgabe** zugrunde, einen Rohrabschneider der anfangs beschriebenen Art zu entwickeln, welcher ein müheloses und schnelles Durchtrennen von Rohren auch unter stark eingeengten räumlichen Bedingungen und beschränkter Zugänglichkeit der Trennstelle ermöglicht.

Diese Aufgabe wird durch einen Rohrabschneider mit den Merkmalen des Oberbegriffes des Anspruchs 1 **gelöst**, welcher dadurch gekennzeichnet ist, daß das Futter wirktechnisch mit einer Antriebswelle verbunden ist und gegenüber dem Gehäuse und um den zu durchtrennnenden Gegenstand mittels Rotation der Antriebswelle rotierbar ist.

Die Antriebswelle eines erfindungsgemäßen Rohrabschneiders ist vorteilhaft derart ausgebildet, daß sie in herkömmliche Spannfutter eines Akkuschraubers, einer Bohrmaschine oder dergleichen einspannbar ist. Bei einem Betrieb des Rohrabschneiders wird dessen Antriebswelle in das Spannfutter eingespannt. Der Rohrabschneider wird mit dem Futter, welches eine den maximal zu durchtrennenden Rohrdurchmesser bestimmende Maulöffnung aufweist, auf das Rohr aufgeschoben. Das Schneidelement wird entsprechend den Maßen des Rohres zugestellt, so daß das Rohr zwischen dem Schneidelement und dem Widerlager eingeklemmt ist. Durch das Maß der Zustellung wird der vom Schneidelement auf das Rohr ausgeübte Schneiddruck bestimmt.

In vorteilhafter Weise ist das Widerlager aus mehreren, vorzugsweise zwei Gegendruckrollen gebildet, die zusammen mit dem Schneidelement eine die Lage des Rohres relativ zum Futter eindeutig definierende Dreipunktlagerung ausbilden.

Durch Betätigung der Bohrmaschine bzw. des Akkuschraubers wird die Antriebswelle des Rohrabschneiders gegenüber dessen Gehäuse in Rotation versetzt. Da die Antriebswelle wirktechnisch mit dem Futter verbunden ist, wird ihre Rotation auf das Futter übertragen. Das Futter vollführt infolge dessen seinerseits eine Rotation im Gehäuse des Rohrabschneiders. Das Futter rotiert dabei zusammen mit dem Schneidelement und dem Widerlager um das zu durchtrennende Rohr. Das Schneidelement vollführt dadurch eine Schnittbewegung, bei der es entlang seines Weges um das Rohr in dessen äußere Oberfläche entsprechend dem sich aus der Zustellung ergebenden Schneiddruck einschneidet. Nach einer oder mehreren Umdrehungen des Futters und des Schneidelements um das Rohr ist der Schneiddruck aufgrund einer Materialdeformation des Rohres abgebaut, so daß eine weitere Zustellung des Schneidelements notwendig ist. Nach der Zustellung erfolgt eine erneute Betätigung des Rohrabschneiders mittels der über die Antriebswelle verbundenen Bohrmaschine, welcher weitere iterative Zustellungen und Betätigungen folgen können, bis das zu durchtrennende Rohr durchtrennt ist.

Durch den maschinellen Antrieb des Rohrabschneiders und die aufgrund dieses Antriebs automatisch erfolgende Schnittbewegung des im Gehäuse aufgenommenen Futters erfolgt ein Durchtrennen eines Rohres mit Vorteil besonders einfach und schnell. Anders als aus dem Stand der Technik bekannt ist es nicht notwendig, den gesamten Rohrabschneider zum Erzeugen einer Schnittbewegung um das Rohr herum zu rotieren oder mühsam manuell mittels eines Ratschenantriebs zu betätigen, weshalb der erfindungsgemäße Rohrabschneider auch unter besonders beengten Bedingungen einfach und mühelos einsetzbar ist. Darüber hinaus wird durch den maschinellen Antrieb und eine Verwendung geeigneter Schneidwerkstoffe die erzielbare Schnittgeschwindigkeit im Vergleich zum Stand der Technik bedeutend erhöht, so daß Schneidvorgänge von Rohren deutlich schneller durchgeführt werden können als bisher.

Nach einer besonderen Ausführungsform der Erfindung weist der Rohrabschneider zur Übertragung einer Bewegung der Antriebswelle auf das Futter eine einen Ratschenantrieb ausbildende Verzahnung auf. Derartige Verzahnungen sind an sich aus dem Stand der Technik bekannt. Die Zähne solcher Verzahnungen weisen jeweils unterschiedlichen Flankenwinkel auf, so daß mittels der Verzahnung Drehmomente in eine Drehrichtung übertragbar sind, während in die entgegengesetzte Drehrichtung wirkende Drehmomente zu einem Durchrutschen der Verzahnung führen. Um die Wirkungsweise einer solchen Ratschenverzahnung weiterhin zu verbessern, wird mit einer weiteren Ausführungsform der Erfindung vorgeschlagen, daß in die Verzahnung mittels einer Feder in Richtung der Verzahnung vorgespannte Gegenelemente eingreifen. Die in Richtung der Verzahnung weisenden Enden der Gegenelemente sind mit einer der Geometrie der Verzahnung entsprechenden Form versehen. Die Formgebung der Gegenelemente und der Verzahnung sind derart aufeinander abgestimmt, daß in eine Drehrichtung wirkende Drehmomente zu einem sicheren und stabilen Eingreifen der Gegenelemente in die Verzahnung führen und somit ohne Durchrutschen übertragen werden können. In die entgegengesetzte Richtung wirkende Drehmomente führen dazu, daß sich die Gegenelemente aufgrund einer Interaktion mit der Verzahnung gegen die Federvorspannung aus dem Eingriffsbereich der Verzahnung heraus bewegen und es somit zu einem Durchrutschen des Ratschenantriebs kommt.

Durch Vorsehen eines solchen Ratschenantriebs wird einerseits eine sichere Übertragung von für die erwünschte Schnittgeschwindigkeit und die erwünschte Schnittiefe erforderlichen Drehmomenten gewährleistet und andererseits ein manuelles Verstellen des Futters entgegen der Schnittrichtung unter Durchrutschen des Ratschenantriebs ermöglicht, was insbesondere zu Beginn eines Trennvorgangs beim Aufschieben des Rohrabschneiders auf das Rohr notwendig und hilfreich sein kann.

Nach einer weiteren Ausführungsform der Erfindung ist zwischen Futter und Antriebswelle ein Kipphebel angeordnet. Dieser dient der Übertragung der Bewegung der Antriebswelle auf das Futter und stellt eine kostengünstige, einfach herzustellende und sichere Lösung für die Bewegungsübertragung dar. Vorzugsweise stehen das Futter und der Kipphebel mittels der Verzahnung in Form eines Ratschenantriebs miteinander in Eingriff. Dadurch werden sowohl die zuvor genannten Vorteile des Ratschenantriebs ermöglicht als auch eine besonders einfache und sichere Übertragung der Bewegung des Kipphebels auf das Futter realisiert.

Nach einer weiteren Ausführungsform der Erfindung weist die Antriebswelle einen Exzenter auf. Vorzugsweise greift der Exzenter in einen am Kipphebel angeordneten Gleitstein ein. Dieser ist mit Vorteil im Kipphebel orthogonal zu dessen Bewegungsebene verschiebbar geführt. Bei einer Rotation der Antriebswelle vollführt der Exzenter eine Bewegung auf einer kreisförmigen Bahn um die Rotationsachse der Antriebswelle herum. Der Radius dieser kreisförmigen Bahn wird durch das Maß der Exzentrizität bestimmt. Durch das Vorsehen des Gleitsteins am Kipphebel wird aus der kreisförmigen Bewegung des Exzenters die in Gleitrichtung des Gleitsteins gerichtete Bewegungskomponente herausgefiltert, während die zu dieser orthogonale Bewegungsrichtung auf den Kipphebel übertragen wird, der daraufhin in eine oszillierende Kippbewegung um die Mittelachse des Futters versetzt wird. Es besteht selbstverständlich die Möglichkeit, die Rotationsbewegung der Antriebswelle mittels beliebiger bekannter Getriebeeinheiten auf das Futter zu übertragen, so daß dieses in die gewünschte Rotation um das zu durchtrennende Rohr versetzt wird, allerdings stellt die vorgeschlagene Lösung mittels Kipphebel und Exzenter eine besonders robuste und kostengünstig herzustellende Lösung dar.

Gemäß einer anderen Ausführungsform der Erfindung wird vorgeschlagen, daß das Schneidelement an einem Schlitten angeordnet ist, der mit dem Gewinde einer Stellschraube zusammenwirkt, die ihrerseits um ihre Längsachse drehbar am Futter angeordnet ist und einer Zustellung des Schneidelements dient. Unter einem Schneidelement im Sinne der vorliegenden Erfindung wird eine beliebige mechanische Einheit verstanden, mittels der der Rohrwerkstoff mechanisch bis zu einem Durchtrennen des Rohres deformiert werden kann. Das Schneidelement ist vorzugsweise ein drehbar am Schlitten angeordnetes Schneidrad oder ein ortsfest am Schlitten angeordnetes Klingenelement. Mit Vorteil kann das Schneidelement austauschbar am Schlitten angeordnet sein, so daß bei Vorliegen eines entsprechenden Verschleißes ein Austausch und Schärfen des Schneidelementes einfach möglich ist. Durch die Zusammenwirkung des Schlittens mit dem Gewinde der Stellschraube wird einerseits eine leichte und genaue Justierung des Schneidelementes relativ zum zu durchtrennenden Rohr und andererseits eine Übertragung von zum Durchtrennen auch harter Rohrmaterialien erforderlicher Schneidkräfte ermöglicht. Als Stellschraube kann beispielsweise, eine handelsübliche Maschinenschraube verwendet werden, was eine preisgünstige Herstellung des erfindungsgemäßen Rohrabschneiders begünstigt. Die Einheit Schneidelement/Schlitten/Stellschraube stellt eine kompakte und stabile Einheit dar, welche einerseits eine gute Verstellbarkeit sowie sichere Übertragung auch größerer Schneidkräfte und andererseits eine einfache Integration in das Futter des Rohrabschneiders ermöglicht, wodurch dessen Baugröße nicht unnötig maximiert wird. Dieses führt dazu, daß der Rohrabschneider in vorteilhafter Weise bei stark beengten Platzverhältnissen einsetzbar ist.

Nach einer besonders vorteilhaften Ausführungsform weist die Stellschraube endseitig einen zahnradartig geformten Kopf auf, dessen zahnförmige Vorsprünge bei einer Drehung des Futters mit wenigstens einem Betätigungselement zusammenwirken, wodurch eine automatische Zustellung des Schneidelements in Abhängigkeit von der Drehung des Futters erreicht wird. Nach einer weiteren Ausführungsform weist wenigstens ein Betätigungselement eine mit der Stellschraube nicht eingreifende Ruhestellung sowie eine Arbeitsstellung zur Betätigung der Stellschraube auf.

Das Betätigungselement ist an einer geeigneten Stelle des Rohrabschneiders derart angeordnet, daß bei einer Rotation des Futters der Kopf der zusammen mit dem Futter rotierten Stellschraube gegen das Betätigungselement stößt. Vorzugsweise ist das Betätigungselement am Gehäuse angeordnet. Durch die zahnradförmige Ausbildung des Kopfes wird erreicht, daß die Stellschraube bei einem Anstoßen an das Betätigungselement und einer weiter fortgeführten Rotation des Futters zusammen mit der Stellschraube um einen bestimmten Winkel um ihre Längsachse gedreht wird, was eine Zustellung des das Schneidelement tragenden Schlittens zur Folge hat. Der Rohrabschneider kann zum Zwecke der automatischen, von der Rotation des Futters abhängenden Zustellung des Schneidrades beliebig viele Betätigungselemente aufweisen. Das Vorsehen zahlreicher Betätigungselemente sowie eines Kopfes der Stellschraube mit zahlreichen Zähnen und einer feinen Zahnteilung ermöglicht eine feine Zustellung während der Umdrehung des Futters. Dem gegenüber kann es ausreichend sein, durch Vorsehen lediglich eines Betätigungselementes und einer verhältnismäßig groben Zahnteilung des Stellschraubenkopfes pro Umdrehung des Futters lediglich einen Zustellungsschritt vorzusehen. Vorteilhafterweise wird durch Vorsehen der zuvor beschriebenen automatischen Zustellung der Stellschraube ein Durchtrennen von Rohren auch starker Wandstärke ermöglicht, ohne die Betätigung des erfindungsgemäßen Rohrabschneiders zum Zwecke der Zustellung der Stellschraube unterbrechen zu müssen. Dieses fördert ein einfaches und schnelles Durchtrennen von Rohren.

Wenn das Betätigungselement wie zuvor beschrieben einerseits in eine Arbeitsstellung und andererseits in eine nicht in die Stellschraube eingreifende Ruhestellung gebracht werden kann, besteht vorteilhafterweise die Möglichkeit, die Zustellung des Schneidelementes an die jeweils vorliegenden Werkstoffeigenschaften des zu durchtrennenden Rohres anzupassen.

Weitere Vorteile und Merkmale der vorliegenden Erfindung ergeben sich aus der folgenden Beschreibung eines bevorzugten, jedoch nicht beschränkenden Ausführungsbeispiels anhand der Figuren. Dabei zeigt:
- Fig. 1: einen Rohrabschneider in einer teilweise geschnittenen Aufsicht,
- Fig. 2: den Rohrabschneider aus Fig. 1 in einer gegenüber Fig. 1 um 90° gedrehten Stellung in einer teilweise geschnittenen Seitenansicht,

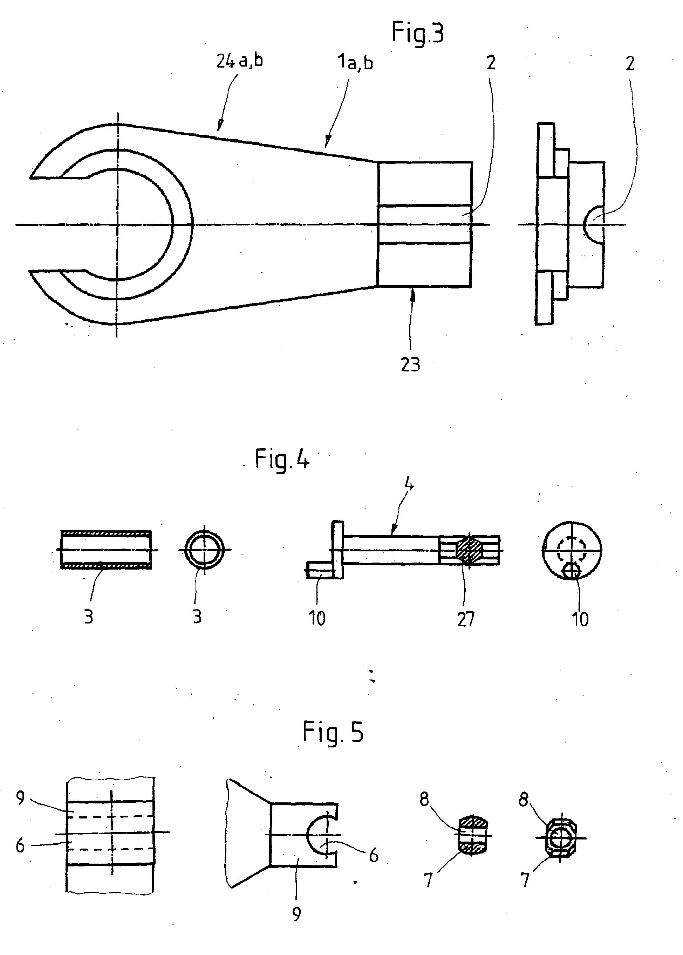

- Fig. 3: ein Gehäuse des Rohrabschneiders aus Fig. 1 in verschiedenen Ansichten,
- Fig. 4: ein Lager und eine Antriebswelle des Rohrabschneiders aus Fig. 1 in verschiedenen Ansichten sowie
- Fig. 5: einen Gleitstein und einen Führungskopf des Rohrabschneiders aus Fig. 1 in verschiedenen Ansichten.

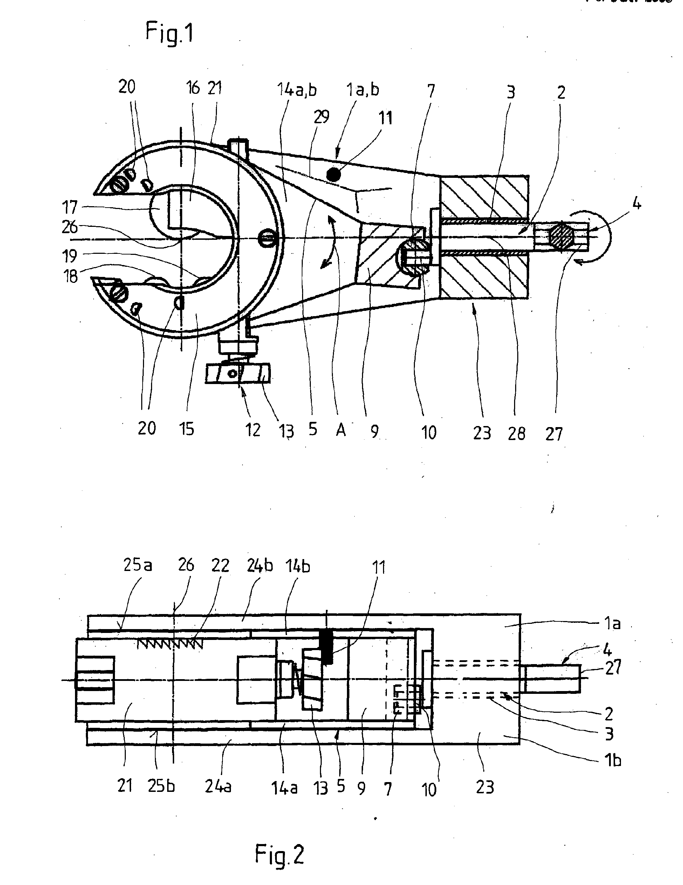

Der in den Fign. 1 und 2 als montierte Einheit schematisch dargestellte Rohrabschneider besitzt ein geteiltes Gehäuse, welches aus zwei Gehäusehälften 1 a, b besteht. Die Gehäusehälften 1 a, b sind miteinander durch nicht dargestellte Schrauben verschraubt und bilden an einem Ende einen massiven Basisbereich 23 aus, an welchen sich zwei seitliche Arme 24a, b anschließen. Zwischen den seitlichen Armen 24a, b ist ein Zwischenraum ausgebildet, welcher der Aufnahme eines Kipphebels 5 sowie einer Futteraufnahme 21 dient.

Der Kipphebel 5 besteht seinerseits aus einem massiven Kipphebelkopf 9 sowie zwei seitlichen Kipphebelarmen 14a, b. Die Kipphebelarme 14a, b sind an ihrem dem Kipphebelkopf 9 abgewandten Ende mit in Fig. 2 angedeuteten Verzahnungen 22 versehen. Die Verzahnungen 22 sind auf den einander gegenüberliegenden Seitenflächen der Kipphebelarme 14a, b vorgesehen und als teilkreisförmige Ratschenverzahnung mit Zähnen mit unterschiedlichen Zahnflankenwinkeln ausgebildet. An der den Verzahnungen 22 gegenüberliegenden Seitenflächen 25a, b ist der Kipphebel 9 in einer in den Zeichnungen nicht näher dargestellten teilkreisförmigen Gleitführung zwischen den seitlichen Armen 24a, b des Gehäuses derart geführt, daß er eine Kippbewegung um die Arbeitsachse 26 ausführen kann. Diese Bewegung ist mittels des Pfeils A angedeutet.

Der Kipphebelkopf 9 ist an seiner den Kipphebelarmen 14a, b abgewandten Seite mit einer Ausnehmung 6 versehen. Die Ausnehmung 6 ist eine in Richtung der Arbeitsachse 26 langgestreckte und quer zur Arbeitsachse 26 teilkreisförmige Ausnehmung. In der Ausnehmung 6 ist ein Gleitstein 7 parallel zur Arbeitsachse 26 gleitbar angeordnet. Der Gleitstein 7 weist eine zentrale Ausnehmung 8 auf, in welche ein mit einer Antriebswelle 4 verbundener Exzenter 10 eingreift.

Im Basisbereich 23 des aus den Gehäusehälften 1a, b gebildeten Gehäuses ist eine Durchgangsöffnung 2 ausgebildet. In dieser Durchgangsöffnung 2 ist ein Lager 3 angeordnet. Das Lager 3 ist durch eine Gleitlagerhülse ausgebildet. Durch das Lager 3 wird die Antriebswelle 4 relativ zum Basisbereich 23 axial unverschiebbar und um ihre Längsachse 28 rotierbar geführt. Die Antriebswelle 4 ist endseitig mit einem Profil 27 versehen, welches in einem herkömmlichen Spannfutter einer Bohrmaschine, eines Akkuschraubers oder dergleichen aufgenommen werden kann. An dem dem endseitigen Profil 27 gegenüberliegenden Ende trägt die Antriebswelle 4 den Exzenter 10.

Wird die Antriebswelle 4 mittels der nicht dargestellten Bohrmaschine in eine Rotation um ihre Längsachse 28 versetzt, so beschreibt der Exzenter 10 eine Bewegung auf einer um die Längsachse 28 herum angeordneten Kreisbahn. Die orthogonal zur Zeichenebene der Fig. 1 liegende Komponente dieser kreisförmigen Bewegung wird dabei durch die in diese Richtung vorgesehene Verschiebbarkeit des Gleitsteins 7 innerhalb der Ausnehmung 6 eliminiert und nicht auf den Kipphebel 5 übertragen. Die in Richtung der Zeichenebene der Fig. 1 liegende Komponente der Kreisbewegung des Exzenters 10 wird über den Gleitstein 7 auf den Kipphebelkopf 9 übertragen, woraufhin der Kipphebel 5 die durch den Pfeil A angedeutete Kippbewegung um die Arbeitsachse 26 herum vollführt. Der Kipphebel ist in einem der Umkehrpunkte dieser oszillierenden Kippbewegung dargestellt. Der andere Umkehrpunkt ist in Fig. 1 mittels einer gestrichelten Linie 29 angedeutet.

Zwischen den Kipphebelarmen 14a, b ist eine Futteraufnahme 21 ausgebildet. Die Futteraufnahme 21 ist als kreissegmentförmige Führung für ein Futter 15 ausgebildet. Das Futter 15 ist in der Futteraufnahme 21 um die Arbeitsachse 26 des Rohrabschneiders herum rotierbar aufgenommen. Das Futter 15 dient seinerseits der Aufnahme einer Stellschraube 12 sowie eines ein Schneidrad 17 tragenden Schlittens 16. Das Schneidrad 17 ist um seine Mittelachse rotierbar im Schlitten 16 aufgenommen. Der Schlitten 16 weist eine in den Zeichnungen nicht dargestellte mit einem Innengewinde versehene Öffnung auf, in welche das Gewinde der Stellschraube 12 eingreift. Der Schlitten 16 ist somit in der Zeichenebene der Fig. 1 auf der Stellschraube 12 verschiebbar angeordnet. An der dem Schlitten 16 und dem Schneidrad 17 gegenüberliegenden Seite des Futters 15 sind zwei Gegenrollen 18, 19 ortsfest und um ihre orthogonal zur Zeichenebene der Fig. 1 verlaufende Rotationsachse rotierbar angeordnet.

Das in der Futteraufnahme 21 angeordnete Futter 15 ist an seinen den Kipphebelarmen 14a, b zugewandten Seitenflächen mit Gegenelementen 20 versehen. Die Gegenelemente 20 greifen in die Verzahnung 22 des Kipphebels 5 ein. Die Gegenelemente 20 sind in Aufnahmen des Futters 15 orthogonal zur Zeichenebene der Fig. 1 vorgespannt und weisen an ihrem der Verzahnung 22 zugewandten Ende einen der Zahnkontur der Verzahnung 22 entsprechenden Zahnkopf auf. Die Gegenelemente 20 und die Verzahnung 22 sind derart ausgebildet, daß eine Rotationsbewegung des Kipphebels 5 um die Arbeitsachse 26 in eine erste Richtung zu einem Einfedern der Gegenelemente 20 in die Aufnahmen des Futters 15 führt, was ein Durchrutschen des Ratschenmechanismusses zur Folge hat. Diese erste Drehrichtung ist in Fig. 1 entgegen dem Uhrzeigersinn gerichtet. Die in Fig. 1 im Uhrzeigersinn gerichtete Bewegung des Kipphebels 5 führt zu einem Verhaken der Verzahnung 22 mit den Gegenelementen 20, wodurch diese Kippbewegung des Kipphebels 5 auf das Futter 15 übertragen wird, woraufhin das Futter 15 in der Futteraufnahme 21 eine der Kippbewegung des Kipphebels 5 entsprechende Teilrotation ausführt. Bei einer nachfolgenden Hubbewegung des Kipphebels in die entgegengesetzte Richtung verharrt das Futter 15 in seiner Endstellung und wird durch eine weitere nachfolgende Bewegung des Kipphebels 5 in Uhrzeigerrichtung weitergedreht. Eine Rotation der Antriebsachse 4 führt somit unabhängig von deren Drehrichtung zu einer Rotation des Futters 15 um die Arbeitsachse 26 in Richtung des Uhrzeigersinns.

Um die Stellung des Schneidrades 17 gegenüber den Gegenrollen 18, 19 auf unterschiedliche Rohrdurchmesser anzupassen, ist die Position des Schneidrades 17 und des Schlittens 16 einfach durch Drehen der Stellschraube 12 einstellbar.

Der Stellschraubenkopf 13 ist mit einer zahnradartigen Außenkontur versehen. Da die Stellschraube 12 rotierbar, aber ortsfest im Futter 15 angeordnet ist, folgt sie bei einer Betätigung des Rohrabschneiders der Rotationsbewegung des Futters 15 um die Arbeitsachse 26. An der Gehäusehälfte 1a ist ein Mitnehmerzapfen 11 angeordnet. Der Mitnehmerzapfen 11 ist dabei so platziert, daß der Stellschraubenkopf 13 bei einer Rotation des Futters 15 zusammen mit der Stellschraube 12 gegen den Mitnehmerzapfen 11 stößt. Bei einer fortgeführten Rotation des Futters 15 führt dieses Anstoßen zu einer Teilrotation der Stellschraube 12 um ihre Längsachse, wodurch eine automatische Zustellung des das Schneidrad 17 tragenden Schlittens 16 in Abhängigkeit von der Rotationsbewegung des Futters 15 erreicht wird.

### Bezugszeichenliste:

- 1a, b: Gehäusehälfte
- 2: Durchgangsöffnung
- 3: Lager
- 4: Antriebswelle
- 5: Kipphebel
- 6: Ausnehmung
- 7: Gleitstein
- 8: Ausnehmung
- 9: Kipphebelkopf
- 10: Exzenter
- 11: Mitnehmerzapfen
- 12: Stellschraube
- 13: Stellschraubenkopf
- 14a, b: Kipphebelarm
- 15: Futter
- 16: Schlitten
- 17: Schneidrad
- 18: Gegenrolle
- 19: Gegenrolle
- 20: Gegenelement
- 21: Futteraufnahme
- 22: Verzahnung
- 23: Basisbereich
- 24a, b: seitlicher Arm
- 25a, b: Seitenflächen
- 26: Arbeitsachse
- 27: Profil
- 28: Längsachse
- 29: Linie (Umkehrpunkt)
- A: Richtungspfeil

## Patentansprüche

1. Rohrabschneider zum Durchtrennen rohrfömiger Gegenstände mit einem Gehäuse (1a, b) und einem gegenüber einem Widerlager (18, 19) zustellbaren Schneidelement (17), bei dem das Schneidelement (17) und das Widerlager (18, 19) in einem gegenüber dem Gehäuse (1a, b) um die Längsachse (26) des zu durchtrennenden Gegenstandes drehbaren Futter (15) angeordnet sind,
**dadurch gekennzeichnet, daß**
das Futter (15) wirktechnisch mit einer Antriebswelle (4) verbunden ist und gegenüber dem Gehäuse (1a, b) und um den zu durchtrennenden Gegenstand mittels Rotation der Antriebswelle (4) rotierbar ist.

2. Rohrabschneider nach Anspruch 1, **dadurch gekennzeichnet, daß** dieser zur Übertragung einer Bewegung der Antriebswelle (4) auf das Futter (15) eine einen Ratschenantrieb ausbildende Verzahnung (22) aufweist.

3. Rohrabschneider nach Anspruch 1 oder 2, **dadurch gekennzeichnet, daß** in die Verzahnung (22) mittels einer Feder in Richtung der Verzahnung (22) vorgespannte Gegenelemente (20) eingreifen.

4. Rohrabschneider nach einem der vorhergehenden Ansprüche, **dadurch gekennzeichnet, daß** zwischen Futter (15) und Antriebswelle (4) ein Kipphebel (5) angeordnet ist.

5. Rohrabschneider nach Anspruch 4, **dadurch gekennzeichnet, daß** das Futter (15) und der Kipphebel (5) mittels der Verzahnung (22) in Form eines Ratschenantriebs miteinander in Eingriff stehen.

6. Rohrabschneider nach einem der vorhergehenden Ansprüche, **dadurch gekennzeichnet, daß** die Antriebswelle (4) einen Exzenter (10) aufweist.

7. Rohrabschneider nach Anspruch 6, **dadurch gekennzeichnet, daß** der Exzenter (10) der Antriebswelle (4) in einen am Kipphebel (5) angeordneten Gleitstein (7) eingreift.

8. Rohrabschneider nach einem der vorhergehenden Ansprüche, **dadurch gekennzeichnet, daß** das Schneidelement (17) an einem Schlitten (16) angeordnet ist, der mit dem Gewinde einer Stellschraube (12) zusammenwirkt, die ihrerseits um ihre Längsachse drehbar am Futter (15) angeordnet ist und einer Zustellung des Schneidelementes (17) dient.

9. Rohrabschneider nach Anspruch 8, **dadurch gekennzeichnet, daß** die Stellschraube (12) endseitig einen zahnradartig geformten Kopf (13) aufweist, dessen zahnförmige Vorsprünge bei einer Drehung des Futters (15) mit wenigstens einem Betätigungselement (11) zusammenwirken, wodurch eine Zustellung des Schneidelementes (17) in Abhängigkeit von der Drehung des Futters (15) erreicht wird.

10. Rohrabschneider nach Anspruch 9, **dadurch gekennzeichnet, daß** wenigstens ein Betätigungselement (11) eine mit der Stellschraube (12) nicht eingreifende Ruhestellung oder eine Arbeitsstellung zur Betätigung der Stellschraube (12) aufweist.

11. Rohrabschneider nach Anspruch 9 oder 10, **dadurch gekennzeichnet, daß** das Betätigungselement (11) am Gehäuse (1a, b) des Rohrabschneiders angeordnet ist.
